Europäisches Patentamt

European Patent Office

Office européen des brevets

(11) Numéro de publication: **0 409 751 B1**

(12) **FASCICULE DE BREVET EUROPEEN**

(45) Date de publication de fascicule du brevet: **07.12.94**

(51) Int. Cl.⁵: **C04B 20/00**, C04B 14/06, C04B 28/02, //(C04B28/02, 14:06,14:10,14:28,24:22)

(21) Numéro de dépôt: **90420345.2**

(22) Date de dépôt: **18.07.90**

(54) **Nouveaux granulats et matières de construction, pâtes de béton prêtes à l'emploi et éléments de construction obtenus avec ces derniers.**

(30) Priorité: **20.07.89 FR 8910023**

(43) Date de publication de la demande:
**23.01.91 Bulletin 91/04**

(45) Mention de la délivrance du brevet:
**07.12.94 Bulletin 94/49**

(84) Etats contractants désignés:
**AT BE CH DE DK ES FR GB GR IT LI LU NL SE**

(56) Documents cités:
**EP-A- 0 008 254    EP-A- 0 252 848
FR-A- 451 532    FR-A- 1 288 833
GB-A- 981 581    US-A- 4 523 755**

**CHEMICAL ABSTRACTS, vol. 104, 1986, page 262, résumé no. 9838c, Columbus, Ohio,US; & JP-A-60 171 255**

**IDEM**

(73) Titulaire: **APPLI 5
"La Richassière"
F-69730 Genay (FR)**

(72) Inventeur: **Pera, Jean
16 rue Gervais Bussière
F-69100 Villeurbanne (FR)**
Inventeur: **Ambroise, Jean
235 Boulevard Pinel
F-69500 Bron (FR)**
Inventeur: **Gniewek, Joseph
90 Avenue Général de Gaulle
F-69300 Caluire (FR)**

(74) Mandataire: **Guerre, Dominique et al
Cabinet Germain et Maureau
20 Boulevard Eugène Deruelle
BP 3011
F-69392 Lyon Cédex 03 (FR)**

Rank Xerox (UK) Business Services
(3.10/3.09/3.3.3)

## Description

La présente invention a pour objet de nouvelles matières, et notamment de nouveaux granulats, pour obtenir des bétons ou mortiers destinés à la construction.

Par construction, on entend toute activité consistant à ériger, réparer, rénover, entretenir, consolider, décorer toutes sortes d'ouvrages, qu'il s'agisse de bâtiments ou immeubles, ou ouvrages d'art tels que ponts ou tunnels. De telles constructions peuvent être effectuées par coulée, et mise en forme directe d'un béton ; elles peuvent aussi intégrer au moins pour partie des éléments de préfabrication, tels que parements, poutres, éléments architectoniques, obtenus indépendamment et préalablement par moulage puis démoulage d'un béton.

De manière préférentielle, mais non exclusive, la présente invention s'intéresse aux matières de construction permettant l'obtention d'éléments préfabriqués de construction, par moulage ou coulée. Aussi l'invention sera-t-elle exposée, définie, décrite et argumentée, par référence à cette application, étant entendu que la portée de la présente invention dépasse ce domaine particulier, pour couvrir d'autres applications telles que l'obtention de vêtures par projection, etc...

Conformément au document JP-A-60171255, on a décrit une matière de construction comprenant un liant hydraulique, du type ciment au laitier ou cendres volantes, une charge constituée par de la perlite ayant une granulométrie contrôlée. Cette matière une fois gâchée avec de l'eau donne une pâte pour coulée ou moulages d'éléments préfabriqués relativement légers.

Une telle matière conduit à des éléments préfabriqués ayant une résistance mécanique limitée, plus adaptés à la décoration qu'à des formes de structure. Les éléments moulés obtenus necessitent une cure de durée relativement importante, et à une température relativement élevée, de l'ordre de 60°C.

Conformement au document FR-C-451532, on a décrit une matière sèche de construction comprenant un ciment (laitier ou Portland), une charge de sable de granulométrie contrôlée par rapport à la répartition des volumes selon les tailles de granulat, permettant d'obtenir un béton de grande compacité, favorisant l'imperméabilité des constructions ou structures obtenues avec ce dernier.

Un tel béton apparaît bien adapté pour mettre en forme, directement par coulée, différentes constructions telles que des dalles, etc... Ce béton apparaît par contre inadapté pour l'obtention d'éléments préfabriqués, notamment en raison de la faible maniabilité des pâtes de béton fabriquées selon ce document.

Dans le domaine des bétons de fibre de verre, selon le brevet EP-C-00008254, on a déjà proposé une matière sèche de construction sous forme divisée, par exemple sous forme de poudre, prête à l'emploi, comprenant :

- de 20 à 60 % d'un ciment
- de 30 à 70 % d'un granulat, notamment d'une charge minérale à l'état divisé
- de 2 à 10 % de fibres de silicate de zirconium, hafnium, vanadium ou de césium, par exemple des fibres de zircone
- de 0,2 à % 1 d'un plastifiant tel qu'un ligno-sulfite
- de 1 à 3 % d'une colle, telle qu'un polymère vinylique
- de 0,1 à 0,5 % d'un agent hydrofuge, tel qu'un stéarate de zinc.

Toujours selon le brevet EP-C-0008254, cette matière sèche est gâchée avec de l'eau, afin d'obtenir une pâte permettant de mouler différents éléments préfabriqués, par coulée, projection, ou injection.

Les éléments préfabriqués ainsi obtenus présentent une résistance mecanique limitée, compatible avec des applications ou mises en oeuvre sous contrainte relativement faible, telles qu'une plaque de parement ou vêture, mais incompatible avec un usage supportant une charge relativement importante, telle qu'une structure porteuse.

Ces éléments présentent aussi une porosité ouverte et importante, ce qui, d'une part augmente leur perméabilité, et d'autre part rend leur structure interne accessible à l'humidité et aux différents agents corrodants ou polluants de l'atmosphère.

Avec la composition de la matière sèche de construction, rappelée ci-dessus, la matrice cimentaire hydratée obtenue contient de la chaux résiduelle. Cette dernière conduit à des pores de diamètre important, par formation de cristaux volumineux.

Comme décrit précédemment, la présente invention a pour objet un granulat et/ou matière sèche de construction, sous forme divisée, prête à l'emploi, permettant à titre principal, mais de manière non exclusive, d'obtenir des éléments préfabriqués moulés, avec ou sans fibres de renfort.

Plus précisément, la pré sente invention a recherché un granulat permettant d'obtenir à la fois, un moulage aisé des éléments préfabriqués, y compris sous faible épaisseur ou avec des formes relativement complexes, par exemple avec des courbures importantes, et un démoulage rapide des éléments obtenus, ce qui passe par l'obtention d'une bonne résistance mécanique des éléments moulés, dans un temps relativement limité.

Selon la présente invention, on a trouvé que ces contraintes imposées par l'obtention en grande série d'éléments moulés, normalement contradictoires, pouvaient être satisfaites par la conjonction ou coopération de trois facteurs :

1) l'utilisation d'une charge siliceuse, de granulométrie contrôlée pour respecter sensiblement la loi selon laquelle la distribution pondérale de ladite charge, exprimée selon la formule $y = \sqrt{d}$, dans laquelle (y) est le pourcentage en poids des particules inférieures au diamètre (d), a substantiellement l'allure d'une droite ; en pratique une telle charge ne peut être obtenue directement à partir des sables ou graviers disponibles dans le commerce, et il ne peut s'agir que d'une silice recomposée, à granulométrie contrôlée, telle qu'utilisée dans les mortiers de résine ou peinture ;

2) l'incorporation et mise en oeuvre d'un agent plastifiant minéral, comprenant une charge divisée de carbonate de calcium ;

3) l'incorporation et mise en oeuvre d'agent thixotropique comprenant un phyllosilicate déshydraté ou pouzzolane de synthèse, notamment un métakaolin.

Ces trois facteurs coopèrent entre eux de la manière suivante :

- le premier apporte une grande compacité au béton obtenu, en limitant sa porosité, ce qui contribue à l'obtention rapide d'une bonne résistance mecanique ;
- le second améliore la rhéologie de la pâte, et apporte une grande maniabilité de cette dernière, nonobstant sa compacité, ce qui est favorable au moulage selon toute technique appropriée ;
- la troisième évite toute ségrégation de la pâte, en dépit de sa granulométrie différenciée, tout en permettant à la pâte de béton de se maintenir ou coller sur une paroi verticale, ce qui est propice au moulage, notamment par vibration.

Selon la demande de brevet EP-A-0252848, on a décrit une pâte composée de ciment, de métakaolin et de fibres de verre alcali-résistantes. La participation du métakaolin à la composition du granulat confère à la pâte obtenue une insensibilité au vieillissement, en particulier due à sa capacité à consommer la chaux libérée lors de l'hydratation du ciment, mais ne concerne en aucun cas les propriétés thixotropiques de la pâte.

L'invention ainsi définie apporte en outre les avantages déterminants suivants.

Grâce à la facilité de moulage obtenue, y compris pour des formes complexes, la quantité de matière a mettre en oeuvre demeure limitée, par rapport à d'autres solutions, du type projection.

La plupart des additifs traditionnels utilisés, notamment de type organique, tels que plastifiants, colles, sels tampons, agents hydrofuges, peuvent être supprimés. Seul un agent fluidifiant de type mélamine peut être ajouté à la matière sèche de départ.

La pouzzolane de synthèse apparaît en outre capable de consommer la chaux libérée lors de l'hydratation du ciment, ce qui favorise la précipitation de silicates de calcium hydrates, en conséquence limite le diamètre d'accès des pores du béton fini, et finalement améliore l'imperméabilité de la matrice cimentaire.

Cette même pouzzolane améliore également la ductilité ou déformabilité des éléments moulés obtenus ; elle évite aussi le ressuage de la pâte, lors de sa prise ou durcissement.

Le carbonate de calcium favorise en outre l'obtention des pores fermés, favorables à l'imperméabilité de la matrice cimentaire ; il accélère la prise de la pâte ou mortier ; il améliore la résistance des éléments moulés obtenus, tant en traction qu'en flexion.

La suppression des additifs traditionnels et la brièveté du temps d'attente avant démoulage assurent un gain de temps considérable à la préfabrication des éléments et permettent d'accroître le rendement de production par une rotation rapide des moules.

Après cure et démoulage, les éléments conservent en service une résistance mécanique très élevée.

Préférentiellement, tous les grains de la charge siliceuse divisée ont un diamètre inférieur à 0,8 mm, et environ 50 % en poids de ladite charge a un diamètre inférieur à 0,3 mm. Au-delà de 0,8 mm, on a trouvé en effet qu'on réaugmentait de manière significative la porosité de la matrice cimentaire hydratée.

Préférentiellement, la pouzzolane de synthèse représente 20 % en poids du granulat.

Le granulat selon la présente invention peut incorporer une charge divisée de carbonate de calcium, à hauteur par exemple de 50 % du poids total du granulat, cette charge complémentaire ayant des particules de dimensions inférieures à 100 $\mu$m.

Selon l'invention, on a trouvé que des particules de carbonate de calcium, ayant des dimensions unitaires au-delà de 100 $\mu$m, ne permettaient plus de concilier des temps de moulage relativement courts, avec de bonnes caractéristiques mécaniques des éléments moulés.

Toujours selon l'invention, un granulat tel que défini et détaillé précédemment peut être mélangé à un liant hydraulique, par exemple un ciment CPA 55R ou HPR, selon les définitions des normes françaises, pour obtenir une matière de construction prête à être gâchée avec de l'eau. Préférentiellement, le ciment ou liant hydraulique peut représenter environ 50 % en poids de la matière totale.

Dans le cas ou la matière ci-dessus doit être moulée ou coulée dans des formes plus ou moins complexes, on pourra ajouter un fluidifiant du type mélamine, ce dernier présentant l'avantage caractéristique de fluidifier la pâte, sans retarder sa prise, et donc le démoulage dans le cas d'une préfabrication.

Toujours en cas de moulage avec une pâte selon l'invention, on pourra aussi utiliser un accélérateur de prise tel que le chlorure de calcium, ou le nitrate de calcium, par exemple à hauteur de 2 % de la matière sèche.

L'utilisation d'une matière sèche selon l'invention, complétée éventuellement par du chlorure de calcium, permet d'abaisser le temps de prise, dans un moule, par exemple à des valeurs de l'ordre de 2 à 3 heures, au lieu de 8 heures avec les matières selon le brevet EP-C-0008254. Et cette accélération de la prise ne nuit pas aux qualités mécaniques requises au moment du démoulage du béton.

Bien entendu, les formulations selon la présente invention, et du granulat et de la matière sèche prête à l'emploi, présentent un intérêt tout particulier avec des fibres de renfort, permettant d'obtenir par moulage différents objets ou éléments présentant de bonnes propriétés mécaniques, et une bonne durabilité.

Les fibres de renfort pouvant être retenues selon l'invention doivent être faites en un matériau résistant à l'action de l'air, de l'eau, et des divers ingrédients du granulat et du ciment. Les matériaux pouvant convenir selon l'invention ressortent d'au moins une des grandes catégories suivantes :
- un matériau minéral de synthèse, tel qu'un verre ou un carbone, à l'exclusion de tout matériau métallique ; on préférera par exemple une fibre de zircone ou une fibre de verre alcali-résistante
- un matériau organique de synthèse, tel qu'un polyéthylène, un polypropylène, un aramide
- un matériau naturel reconstitué, tel que la cellulose.

Les fibres de renfort peuvent se présenter sous des formes très variées, telles que mâts, voiles, étoffes, non tissés, tissus, grilles, nappes, etc..., la proportion de fibres, la structure, et la contexture des matériaux utilisés dépendant des applications envisagées.

Préférentiellement, les fibres de renfort présentent entre 1,5 et 5 % du poids total de la matière sèche. En-dessous de 1,5 % en poids, les fibres n'apportent aucun renfort significatif ; et au-dessus de 5 % en poids, on est souvent confronté à des difficultés de coulée ou moulage de la pâte. Et toujours, pour contribuer à la compacité de la matrice cimentaire, et en particulier limiter sa porosité, la distribution pondérale des fibres de renfort selon leur longueur, exprimée selon la formule $z = f(\sqrt{\overline{\ell}})$, dans laquelle (z) est le pourcentage en poids des fibres ayant une longueur inférieure à ($\ell$), a substantiellement l'allure d'une droite.

A titre d'exemple, les fibres sont distribuées selon la répartition suivante, à savoir :
- 1/3 en poids de fibres inférieures à 5 mm
- 2/3 en poids de fibres inférieures à 25 mm et supérieures à 5mm.

Les fibres de renfort peuvent être mélangées au départ à la matière sèche, comme elles peuvent être introduites dans la pâte, au moment de sa coulée dans le moule par exemple.

En ce qui concerne l'incorporation de l'eau à la matière sèche définie précédemment, on peut préférer la proportion suivante, à savoir de 18 à 20 litres d'eau pour 75 à 80 kg de matière sèche.

A titre d'exemple, pour obtenir un béton selon l'invention, on peut utiliser les proportions suivantes :
- 60 kg de ciment, métakaolin, carbonate de calcium, et fluidifiant
- 15 kg de silice
- 2 kg de fibres de zircone
- 18 litres d'eau.

Comme déjà dit, une pâte de béton ou mortier selon l'invention, peut servir au moulage ou préfabrication de divers éléments, notamment architectoniques, comme plaques de façade, corniches, encadrements de baies, acrotères, éléments décoratifs de façade, pilastres, caches, vêtures, etc...

Ces éléments peuvent être ou non colorés par tous colorants appropries.

La pâte selon l'invention est vibrée par épandage ou projection dans un moule simple ou un moule et un contre-moule. Le temps ouvert est d'environ 30 minutes, et le démoulage est fait deux heures après mise en place. Le moule est chauffé entre 10° C et 30° C. Et la durée de la cure des éléments moulés, en position verticale ou horizontale est d'environ 15 jours.

La présente invention est maintenant décrite à titre expérimental, et de manière comparative, par rapport à la matière de construction dite CRIDOFIBRE, telle que vendue par la Société APPLI 5, cette matière répondant à la définition générale du brevet EP-C-0008254.

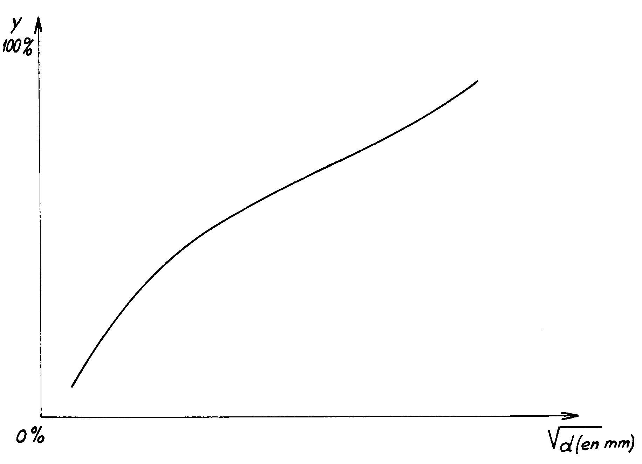

Deux lots d'éprouvettes de béton, découpées dans des plaques de plus grandes dimensions, ayant une longueur de 28 cm, une largeur de 7 cm, et une épaisseur de 1 cm, sont respectivement obtenues selon le mode d'emploi du CRIDOFIBRE, et selon l'invention, et plus précisément selon l'exemple de gâchée donné précédemment. La matière sèche utilisée selon l'invention, comporte une charge siliceuse présentant une répartition granulométrique, exprimée selon $y = \sqrt{d}$, sensiblement voisine d'une droite. Cette répartition est montrée à la figure 1 en annexe.

Ces éprouvettes sont soumises à des cures, de durées croissantes, dans les mêmes conditions de température et d'hygrométrie, par ensachage dans des sacs plastiques étanches. La résistance en traction par flexion de ces éprouvettes est mesurée avec un appareil ADAMEL LHOMARGY DY 25, avec lequel chaque éprouvette est soutenue en trois points, selon une portée de 20 cm, avec une charge centrée, la vitesse de déplacement de cette dernière étant de 5 mm par minute. Les résistances suivantes, exprimées en MPa, ont été ainsi obtenues :

| Age de l'Eprouvette en jours | CRIDOFIBRE | INVENTION |
|---|---|---|
| 1 | 4,3 | 6 |
| 7 | 10,6 | 14 |
| 10 | 14 | 17 |

Aux faibles âges, on note déjà un écart de résistance de 40 % en faveur de la présente invention. Les produits moulés avec un granulat et/ou une matière sèche selon l'invention présenteront donc intrinsèquement une meilleure ductilité et une meilleure déformabilité.

Avec les mêmes éprouvettes, sur lesquelles on prélève des échantillons de 3 ou 4 grammes, on procède à des mesures de porosité au mercure, avec un porosimètre MICROMERITICS 9300, la pression maximale d'intrusion étant de 200 MPa. Le volume de mercure introduit à la pression maximale représente la porosité totale de l'échantillon. Au préalable, l'hydratation des échantillons a été arrêtée, en les maintenant sous vide, jusqu'à obtention d'un poids constant. Les résultats suivants ont été obtenus :

| ECHANTILLON / PARAMETRE | CRIDOFIBRE | INVENTION |
|---|---|---|
| Porosité totale en mm3 de mercure | 22.3 | 20,1 |
| Diamètre moyen des pores | 0,06 | 0,06 |

On note donc une réduction de 10 % de la porosité totale, en faveur de l'invention, ce qui contribue à une meilleure compacité des objets moulés, favorable et à leur bonne résistance mécanique, et à leur durabilité vis-à-vis des différents agents extérieurs, comme l'eau, susceptibles de les altérer avec le temps.

S'agissant des pores, l'invention ne modifie pas le diamètre moyen des pores. Mais, par une étude complémentaire, on constate néanmoins que la présente invention modifie la répartition en dimension de ces pores :
- le nombre des pores compris entre 0,25 et 2,5 mm est diminué selon l'invention d'environ 50 %
- le nombre des pores compris entre 0,07 et 0,15 mm est augmenté selon l'invention de 30 %

La diminution de la taille unitaire des pores obtenue selon l'invention, augmente l'imperméabilité des éléments moulés, et contribue encore à leur meilleure durabilité.

**Revendications**

1. Granulat de construction, présenté sous forme divisée, prêt à l'emploi, destiné à être mélangé à de l'eau et du ciment, pour l'obtention d'un béton, comprenant une charge siliceuse divisée, caractérisé en ce qu'en combinaison :

- la charge siliceuse a une granulométrie contrôlée pour respecter sensiblement la loi selon laquelle la distribution pondérale de ladite charge, exprimée selon la formule y $= \sqrt{d}$, dans laquelle (y) est le pourcentage en poids des particules inférieures au diamètre (d), a substantiellement l'allure d'une droite ;
- un agent plastifiant minéral, comprenant une charge divisée de carbonate de calcium, est incorporé au granulat ;
- un agent thixotropique comprenant un phyllosilicate déshydraté ou pouzzolane de synthèse, notamment un métakaolin, est incorporé au granulat.

2. Granulat selon la revendication 1, caractérise en ce que tous les grains ont un diamètre inférieur à 0,8 mm et environ 50 % en poids de la charge siliceuse a un diamètre inférieur à 0,3 mm.

3. Granulat selon la revendication 1, caractérisé en ce que la charge divisée du carbonate de calcium représente environ 50 % en poids du granulat.

4. Granulat selon la revendication 1, caractérisé en ce que la charge de carbonate de calcium comprend des particules de dimensions inférieures à 100 $\mu$m.

5. Granulat selon la revendication 1, caractérisé en ce que la pouzzolane de synthèse représente environ 20 % en poids total dudit granulat.

6. Matière sèche de construction, sous forme divisée, prête à l'emploi, comprenant un granulat selon l'une quelconque des revendications 1 à 5, caractérisée en ce qu'elle comprend un liant hydraulique, dans la proportion d'environ 50 % en poids total de ladite matière.

7. Matière selon la revendication 6, caractérisée en ce que le ciment est un ciment CPA 55 R ou HPR selon la normalisation française.

8. Matière selon la revendication 6, caractérisée en ce qu'elle comprend un agent fluidifiant du type mélamine.

9. Matière selon la revendication 6, caractérisée en ce qu'elle comprend des fibres de renfort, résistantes à l'action de l'air, de l'eau, et des ingrédients du granulat et du ciment, ces fibres étant faites en au moins un des matériaux suivants :
    - un matériau minéral de synthèse, tel qu'un verre ou du carbone, à l'exclusion de tout matériau métallique
    - un matériau organique de synthèse, tel qu'un polyéthylène, un polypropylène, un aramide
    - un matériau naturel reconstitué, tel que la cellulose.

10. Matière selon la revendication 9, caractérisée en ce que le poids des fibres de renfort représente entre 1,5 et 5 % du poids total de ladite matière.

11. Matière selon la revendication 9, caractérisé en ce que la distribution pondérale des fibres de renfort selon leur longueur, exprimée selon la formule Z = f $(\sqrt{\ell})$, dans laquelle (z) est le pourcentage en poids des fibres ayant une longueur inférieure à ($\ell$), a substantiellement l'allure d'une droite.

12. Matière selon la revendication 11, caractérisée en ce que les fibres sont distribuées selon la répartition suivante, à savoir 1/3 du poids pour les fibres inférieures à 5 mm, et 2/3 du poids pour les fibres inférieures à 25 mm et supérieures à 5 mm.

13. Pâte de béton prête à l'emploi, utilisable notamment comme mortier ou enduit, comprenant la matière selon l'une quelconque des revendications 6 à 12, mélangée à de l'eau.

14. Pâte selon la revendication 13, caractérisée en ce que l'eau est gâchée avec la matière sèche de construction, à proportion de 18 à 20 litres d'eau pour 75 à 80 kg de matière sèche.

15. Construction obtenue par mise en forme d'une pâte selon l'une quelconque des revendications 13 et 14

**16.** Elément de construction préfabriqué, tel qu'un élément architectonique, obtenu par moulage d'une pâte selon l'une quelconque des revendications 13 et 14.

**Claims**

**1.** Construction aggregate, in a ready to use divided form, to be mixed with water and cement to form concrete, comprising a divided siliceous filler, characterised in that :
- the siliceous filler has a controlled granulometry, such that it substantially obeys the law by which the weight distribution of said charge, as expressed by the formula in which (y) is the weight percentage of particles of diameter inferior to (d), is represented by a substantially straight line ;
- a mineral plasticising agent, comprising divided calcium carbonate filler, is incorporated into the aggregate ;
- a thixotropic agent, comprising dehydrated phyllosilicate or synthetic poussolana, in particular a metakaolin, is incorporated into the aggregate.

**2.** Aggregate according to claim 1, characterised in that all of the grains are of a diameter less than 0.8 mm and in that about 50 % by weight of the siliceous filler is of a diameter less than 0.3 mm.

**3.** Aggregate according to claim 1, characterised in that the divided calcium carbonate filler makes up about 50 % by weight of the aggregate.

**4.** Aggregate according to claim 1, characterised in that the calcium carbonate filler comprises particles of size smaller than 100 $\mu$m.

**5.** Aggregate according to claim 1, characterised in that the synthetic pouzzolana makes up about 20 % of the total weight of the aggregate.

**6.** Dry construction material, in a ready to use divided form, comprising an aggregate according to any one of claims 1 to 5, characterised in that it further comprises a binder, in an amount of about 50 % by total weight of the material.

**7.** Material according to claim 6, characterised in that the cement is a CPA 55 R or HPR cement according to the French NF Standard.

**8.** Material according to claim 6, characterised in that it further comprises a melamine type liquefier.

**9.** Material according to claim 6, characterised in that it further comprises reinforcing fibres, which resist corrosion to air, water, and aggregate and cement ingredients, wherein the fibres consist of at least one of the following materials :
- a synthetic mineral material, such as glass or carbon, but excluding all metallic materials ;
- a synthetic organic material, such as a polyethylene, a polypropylene, and an aramide ;
- a reconstituted natural material, such as cellulose.

**10.** Material according claim 9, characterised in that the weight of reinforcing fibres represents between about 1.5 and 5 % of the total weight of said material.

**11.** Material according to claim 9, characterised in that the weight distribution of the reinforcing fibres according to their length, as expressed by the formula z = f multiplied by the square root of (1), wherein z is the percentage of fibres having a length less than (1), is represented by a substantially straight line.

**12.** Material according to claim 11, characterised in that the fibres have the following distribution :
- one third of the weight is constituted by fibres shorter than 5 mm ;
- two thirds of the weight is constituted by fibres longer than 5 mm and shorter than 25 mm.

**13.** Ready to use concrete slurry, particularly for use as mortar or facing, comprising a material according to any one of claims 6 to 12.

14. Slurry according to claim 13, characterised in that the water is mixed with the dry construction material in an amount of 18 to 20 litres of water to 75 to 80 kg of dry matter.

15. A construction obtained by shaping a slurry according to any one of claims 13 and 14.

16. Prefabricated construction element, such as an architectonic element, obtained by moulding a slurry according to any one of claims 13 and 14.

**Patentansprüche**

1. Zuschlag für Baumaterialien, der in Teilchenform vorliegt und für den Einsatz bereit ist, der ferner dazu vorgesehen ist, mit Wasser und Zement vermischt zu werden, um Beton zu erhalten, enthaltend eine teilige Kieselcharge, dadurch gekennzeichnet, daß folgendes in Kombination vorliegt:
   - die Kieselcharge weist eine eingestellte Granulometrie auf, die im wesentlichen die Gesetzmäßigkeit erfüllt, nach der die Gewichtsverteilung dieser Charge, ausgedrückt durch die Formel $y = \sqrt{d}$ , in der (y) der prozentuale Gewichtsanteil der Teilchen mit einem Durchmesser kleiner (d) bedeutet, im wesentlichen die Gestalt einer Geraden aufweist;
   - ein im Zuschlag inkorporiertes mineralisches plastifizierendes Agens, das eine teilige Charge an Calciumcarbonat aufweist; und
   - ein im Zuschlag inkorporiertes thixotropes Agens, das ein wasserfreies Phyllosilikat oder ein synthetisches Puzzolan, insbesondere ein Metakaolin, enthält.

2. Zuschlag nach Anspruch 1, dadurch gekennzeichnet, daß alle Körner einen Durchmesser kleiner 0,8 mm aufweisen, und daß etwa 50 Gew.-% der Kieselcharge einen Durchmesser kleiner 0,3 mm aufweisen.

3. Zuschlag nach Anspruch 1, dadurch gekennzeichnet, daß die teilige Charge an Calciumcarbonat etwa 50 Gew.-% des Zuschlages darstellt.

4. Zuschlag nach Anspruch 1, dadurch gekennzeichnet, daß die Charge an Calciumcarbonat Partikel mit einer Größe unterhalb von 100 $\mu$m aufweist.

5. Zuschlag nach Anspruch 1, dadurch gekennzeichnet, daß das synthetische Puzzolan etwa 20 Gew.-% des Gesamtgewichts des Zuschlages darstellt.

6. Trockenes, in teiliger Form vorliegendes, für den Einsatz bereites Baumaterial, enthaltend einen Zuschlag nach einem der Ansprüche 1 bis 5, dadurch gekennzeichnet, daß es ein hydraulisches Bindemittel mit einem Gewichtsanteil von etwa 50 Gew.-% des Baumaterials aufweist.

7. Baumaterial nach Anspruch 6, dadurch gekennzeichnet, daß der Zement ein Zement CPA 55 R oder HPR entsprechend der französischen Norm ist.

8. Baumaterial nach Anspruch 6, dadurch gekennzeichnet, daß es ein fluidisierendes Agens vom Melamin-Typ enthält.

9. Baumaterial nach Anspruch 6, dadurch gekennzeichnet, daß es Verstärkungsfasern aufweist, die gegenüber der Einwirkung von Luft, von Wasser sowie von den Bestandteilen des Zuschlages und des Zements widerstandsfähig sind, wobei diese Fasern zumindest aus einem der folgenden Materialien bestehen:
   - ein synthetisches mineralisches Material, wie Glas oder Kohlenstoff, mit dem Ausschluß von jeglichen metallischen Materialien,
   - ein synthetisches organisches Material, wie Polyethylen, Polypropylen, Aramid,
   - ein chemisch wieder aufgebautes, natürliches Material, wie Zellulose.

10. Baumaterial nach Anspruch 9, dadurch gekennzeichnet, daß der Gewichtsanteil der Verstärkungfasern zwischen 1,5 und 5 Gew.-% des Gesamtgewichts des Baumaterials darstellt.

**11.** Baumaterial nach Anspruch 9, dadurch gekennzeichnet, daß die Gewichtsverteilung der Verstärkungsfasern bezüglich deren Länge, ausgedrückt durch die Formel z = f ($\sqrt{l}$), in der (z) der prozentuale Gewichtsanteil der Fasern mit einer Länge kleiner (l) bedeutet, im wesentlichen die Gestalt einer Geraden aufweist.

**12.** Baumaterial nach Anspruch 11, dadurch gekennzeichnet, daß die Fasern entsprechend der nachfolgenden Aufteilung verteilt sind, nämlich 1/3 Gewichtsanteil Fasern kleiner 5 mm, und 2/3 Gewichtsanteil Fasern kleiner 25 mm, aber größer 5 mm.

**13.** Einsatzbereite Betonmasse, insbesondere zur Verwendung als Mörtel oder Verputz, enthaltend das Baumaterial nach einem der Ansprüche 6 bis 12, und zwar vermischt mit Wasser.

**14.** Masse nach Anspruch 13, dadurch gekennzeichnet, daß das Wasser mit dem trockenen Baumaterial in einem Verhältnis von 18 bis 20 Liter Wasser für 75 bis 80 kg Trockenmaterial angemacht ist.

**15.** Bauwerk, erhalten durch Formen einer Masse nach einem der Ansprüche 13 oder 14.

**16.** Vorgefertigtes Bauelement, wie ein architektonisches Element, erhalten durch Formgießen einer Masse nach einem der Ansprüche 13 oder 14.